# EUROPEAN PATENT APPLICATION

(11) **EP 4 709 051 A1**
(43) Date of publication of application: **11.03.2026**
(21) Application number: 24868665.1
(22) Date of filing: 13.09.2024
(51) Int. Cl.: H05B 6/12, H05B 6/06, F24C 15/10, F24C 7/08, H02M 1/00, H02M 1/08, F24C 15/34

(54) **HOME APPLIANCE**

(30) Priority: 21.09.2023 KR 20230126657; 21.09.2023 KR 20230126658; 26.09.2023 KR 20230129155; 22.02.2024 KR 20240026117; 13.08.2024 KR 20240108518
(71) Applicant: LG Electronics Inc., Yeongdeungpo-gu Seoul 07336 (KR)
(72) Inventor: CHA, Kwanghyung, Seoul 08592 (KR); KANG, Kyelyong, Seoul 08592 (KR); OH, Dooyong, Seoul 08592 (KR); HAN, Jinwook, Seoul 08592 (KR); LEE, Jae-Woo, Seoul 08592 (KR)
(74) Representative: Vossius & Partner Patentanwälte Rechtsanwälte mbB
(86) International application number: PCT/KR2024/014089
(87) International publication number: WO 2025/063688

(57) **Abstract**

The present invention provides an induction heating home appliance. The home appliance has a wire connection structure which causes electric currents to flow in opposite directions between heating coils connected in series. By this structure, a magnetic field is generated in a direction in which directions of magnetic fields are offset from each other to overlap eddy currents of vessels, thereby improving heating performance and efficiency of the home appliance.

## Description

### TECHNICAL FIELD

The present disclosure relates to a home appliance, and more particularly, to a home appliance including an induction heating cooktop.

### BACKGROUND ART

Recently, an induction range using induction heating technology is attracting attention as a next-generation cooking appliance that may replace a gas range due to advantages such as high heating efficiency, fast heating speed, stability, convenience, etc.

An induction heating cooktop product includes an induction heating cooktop having a heating coil composed of a ritz wire. When an induction-compatible container is located at a predetermined burner position, the container is heated. This scheme has a disadvantage in that the container should be placed only at a predetermined position, and has a disadvantage in that heating efficiency decreases when the position of the container is slightly incorrect.

Accordingly, all-free induction heating technology is being developed. This is a technology capable of heating the induction-compatible container even when the induction-compatible container is positioned not only at a predetermined area of an induction heating top plate but also at various positions thereof, and has the advantage that various sized containers and a multiple-compartment container having three or more compartments may also be heated.

### SUMMARY OF DISCLOSURE

### TECHNICAL PURPOSE

A purpose of the present disclosure is to provide a home appliance in which eddy currents superimpose on each other in a container to increase heating performance and efficiency.

A purpose of the present disclosure is to provide a home appliance that generates magnetic fields having directions such that the magnetic fields cancel each other out.

A purpose of the present disclosure is to provide a home appliance in which wirings for a plurality of heating coils are optimally arranged.

A purpose of the present disclosure is to provide a home appliance in which a space for receiving wirings of a plurality of sensing coils and a plurality of temperature sensors is secured.

A purpose of the present disclosure is to provide a home appliance in which a plurality of heating coils and a plurality of sensing coils are formed into an integrated PCB pattern assembly, thereby contributing to simplification of a manufacturing process of the home appliance.

The purposes to be solved according to an embodiment of the present disclosure are not limited to the above-mentioned purposes, and other purposes not mentioned will be clearly understood by those skilled in the art from the following description.

### TECHNICAL SOLUTION

The home appliance according to an embodiment of the present disclosure has a wiring structure so that the respective currents flowing in the heating coils connected in series to each other flow in the opposite directions to each other.

Specifically, the first heating coil is formed in a pattern in which it is wound inwardly to an inner center thereof in a clockwise direction, and the second heating coil is formed in a pattern in which it is wound from an inner center thereof outwardly in a counterclockwise direction.

In the home appliance according to an embodiment of the present disclosure, the heating coils are connected to each other such that the magnetic fields generated therefrom have directions so as to cancel each other out. Specifically, the first heating coil and the second heating coil are connected to each other such that the opposite polarities of the first heating coil and the second heating coil are connected to each other. The first heating coil is connected to a first heating coil terminal connected to an output terminal of the inverter circuit, and the second heating coil is connected to a second heating coil terminal connected to a ground voltage terminal.

In the home appliance according to an embodiment of the present disclosure, wirings for a plurality of heating coils are optimally positioned. Specifically, the first heating coil and the second heating coil are connected to the heating coil terminal via the wiring intersecting the center of the first heating coil and the center of the second heating coil.

In the home appliance according to an embodiment of the present disclosure, terminals and wirings are arranged so that a space for receiving wirings of a plurality of sensing coils and a plurality of temperature sensors is secured.

Specifically, a third heating coil terminal connecting the first heating coil and the second heating coil to each other is disposed at a middle point of one side of the PCB pattern assembly, and the first heating coil terminal and the second heating coil terminal are disposed at the left or right side around the middle point of one side of the PCB pattern assembly.

In the home appliance according to an embodiment of the present disclosure, a plurality of heating coils and a plurality of sensing coils are formed into an integral PCB pattern assembly, thereby contributing to the simplification of the manufacturing process of the home appliance.

Specifically, the PCB pattern assembly includes heating coil PCBs of a plurality of layers and sensing coil PCBs of a plurality of layers, a temperature sensor is disposed at a center of each of the plurality of sensing coils, a connector having a plurality of connection ports is disposed at the right or left side around the middle point of one side of the PCB pattern assembly, and the plurality of sensing coils and the plurality of temperature sensors are connected to the respective connection ports of the connector via respective sensing wirings, respectively.

### TECHNICAL EFFECT

As described above, according to the present disclosure, the currents respectively flowing in the heating coils connected in series to each other have the opposite flow directions to each other, thereby generating the respective magnetic fields having the directions in which the magnetic fields cancel each other out.

In addition, according to the present disclosure, the heating coils are connected in series to each other such that opposite polarities thereof are connected to each other, thereby generating the respective magnetic fields having the directions in which the magnetic fields cancel each other out.

In addition, according to the present disclosure, the respective magnetic fields have the directions in which the magnetic fields cancel each other out, such that the eddy currents in the container superimpose on each other, thereby increasing heating performance and efficiency of the home appliance.

In addition, according to the present disclosure, the heating coils connected in series to each other may be connected to the heating coil terminal via the wiring intersecting the centers of the heating coils connected in series to each other, such that the wirings for the plurality of heating coils may be optimally arranged.

In addition, according to the present disclosure, the heating coil terminal connecting the heating coils connected in series to each other to each other is disposed at the middle point of one side of the PCB pattern assembly, and the heating coil terminal connected to each of the heating coils connected in series to each other is disposed at the left or right side around the middle point of one side of the PCB pattern assembly, thereby securing a space for receiving the wirings of the plurality of sensing coils and the plurality of temperature sensors.

In addition, according to the present disclosure, the heating coil PCBs of a plurality of layers and the sensing coil PCBs of a plurality of layers may be formed into the integrated PCB pattern assembly, thereby contributing to simplification of processes such as masking, printing, etching, and the like.

In addition, according to the present disclosure, the wiring intersecting the centers of the heating coils connected in series to each other may connect the heating coils to each other, such that an optimal wiring route may be implemented.

In addition, according to the present disclosure, the heating coil terminals respectively connected to the heating coils connected in series to each other may be positioned at the same side, thereby securing a space for receiving the wirings of the plurality of sensing coils and the wirings of the plurality of temperature sensors.

In addition, the heating coils connected in series to each other the heating coils adjacent to each other in the front-rear direction, and/or the heating coils adjacent to each other in the left-right direction are connected to each other such that the opposite polarities thereof are connected to each other so that the currents thereof flow in the opposite directions, such that the magnetic fields generated therefrom cancel each other out. Thus, the eddy currents respectively generated under the magnetic fields in the container may superimpose on each other each other, thereby increasing the heating performance and efficiency of the home appliance.

In addition to the above-described effects, specific effects of the present disclosure will be described together while describing specific matters for implementing the present disclosure.

### BRIEF DESCRIPTION OF DRAWINGS

FIG. 1 is an exploded perspective view illustrating an exploded state of a cooktop in a home appliance according to an embodiment of the present disclosure;
FIG. 2 is a plan view of the cooktop shown in FIG. 1 and a diagram showing the configuration of a PCB pattern coil assembly.
FIG. 3 is a diagram illustrating a connection structure between heating coils connected in series to each other in a home appliance according to an embodiment of the present disclosure.
FIG. 4 is a diagram illustrating current directions of heating coils connected in series to each other in a home appliance according to an embodiment of the present disclosure.
FIG. 5 is a diagram showing a magnetic field direction generated from a heating coil and a magnetic field direction generated under electromagnetic induction in a home appliance according to an embodiment of the present disclosure.
FIG. 6A is a diagram illustrating a connection structure between heating coils connected in series and in parallel with each other in a home appliance according to an embodiment of the present disclosure.
FIG. 6B is a circuit diagram illustrating a connection state between heating coils connected in series and parallel with each other and an inverter circuit in a home appliance according to an embodiment of the present disclosure.
FIG. 6C is a circuit diagram illustrating a connection state between heating coils and heating coil terminals in a home appliance according to an embodiment of the present disclosure.
FIG. 7 is a diagram illustrating a current direction of each of heating coils connected in series and parallel with each other in a home appliance according to an embodiment of the present disclosure.
FIG. 8 is a diagram illustrating an inverter circuit and a load circuit in a home appliance according to an embodiment of the present disclosure.

### DETAILED DESCRIPTIONS

The above-described purposes, features, and advantages will be described in detail with reference to the accompanying drawings, and accordingly, a person having ordinary skill in the art to which the present disclosure pertains will be able to easily implement the technical idea of the present disclosure. In the description of the present disclosure, when it is determined that a detailed description of a known technology related to the present disclosure may unnecessarily obscure the gist of the present disclosure, the detailed description will be omitted. Hereinafter, preferred embodiments according to the present disclosure will be described in detail with reference to the accompanying drawings. In the drawings, the same reference numerals are used to indicate the same or similar components.

Although the first, second, and the like are used to describe various components, it is obvious that these components are not limited by these terms. These terms are used to distinguish only one component from another component. Unless otherwise stated, the first component may be the second component.

The present disclosure is not limited to the embodiments disclosed below, but various changes may be applied thereto and the present disclosure may be implemented in various different forms. However, the present embodiment is provided so that the present disclosure is complete and the scope of the present disclosure is fully informed to those skilled in the art. Therefore, the present disclosure is not limited to the embodiments disclosed below, but it should be understood that a configuration of one embodiment and a configuration of another embodiment are substituted with each other or are added to each other, and all changes, equivalents, and substitutes included in the technical spirit and scope of the present disclosure are included in the present disclosure.

The accompanying drawings are only set forth for easy understanding of the embodiments disclosed in the present disclosure, and the technical spirit disclosed in the present disclosure is not limited by the accompanying drawings, and it should be understood that all changes, equivalents, and substitutes included in the spirit and technical scope of the present disclosure are included in the present disclosure. In the drawings, the components may be expressed to be larger or smaller in size or thickness in consideration of convenience of understanding, etc. However, the scope of the present disclosure should not be limited thereto.

The terms used herein are used only to describe specific embodiments or embodiments, and are not intended to limit the present disclosure. As used herein, the singular constitutes "a" and "an" are intended to include the plural constitutes as well, unless the context clearly indicates otherwise In the present disclosure, terms such as "include" and "comprise" are intended to designate that a feature, a number, a step, an operation, a component, a part, or a combination thereof as described in the present disclosure exist. That is, it should be understood that in the present disclosure, the terms such as "include" and "comprise" do not exclude the presence or addition of one or more other features, numbers, steps, operations, components, parts, or combinations thereof.

Terms including ordinals, such as first, second, etc., may be used to describe various components, but the components are not limited by the terms. The terms are used only for the purpose of distinguishing one component from another component.

When it is mentioned that one component is "connected" or "coupled" to another component, it should be understood that one component may be directly connected or coupled to another component, or still another component may be present therebetween. On the other hand, when it is mentioned that one component is "directly connected" or "directly coupled" to another component, it should be understood that still another component is absent therebetween.

When one component is referred to as "being disposed on top of" or "being disposed under" another component, it should be understood that one component may be directly disposed on top of or under another component or still another component may be present therebetween.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

For example, embodiments in which a heating coil assembly is used in a cooking appliance are described in the present disclosure. However, in some further embodiments, the heating coil assembly may be applied to other home appliances that require induction heating.

For example, the heating coil assembly may be mounted on a washing machine to heat a water tank, a drum, or a washing tub inside the washing machine or to heat washing water.

In another example, the heating coil assembly may be mounted on a water purifier and used to heat a hot water pipe or a water tank.

In still another example, the heating coil assembly may be mounted on a laundry dryer or a laundry care apparatus and used to heat air for drying the laundry.

In still yet another example, the heating coil assembly may be mounted on an electric port or a rice cooker and used to heat a liquid or food therein.

### [Overall Structure of Induction Heating Cooktop]

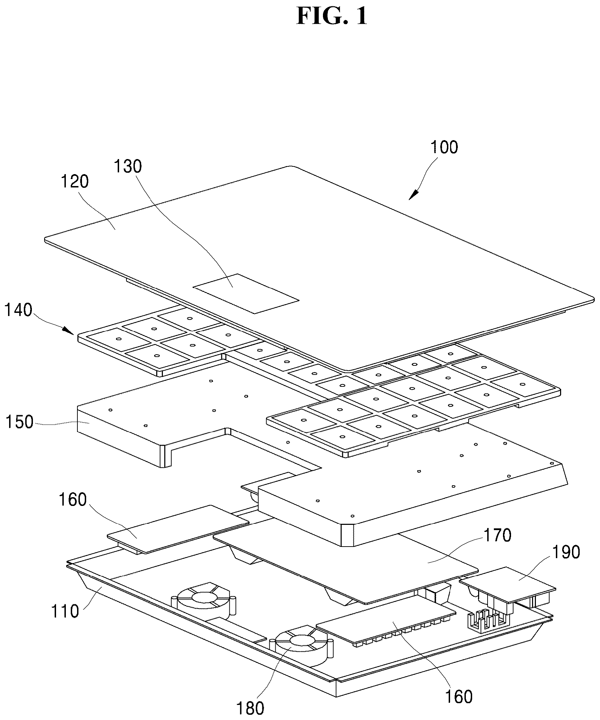

FIG. 1 is an exploded perspective view illustrating an exploded state of an induction heating cooktop 100 in a home appliance according to an embodiment of the present disclosure.

The home appliance according to an embodiment of the present disclosure may be an oven range type home appliance in which the cooktop 100 is disposed in an upper area and an oven is disposed in a lower area. The present disclosure is not limited thereto, and the home appliance according to an embodiment of the present disclosure may be embodied as a home appliance in which the cooktop 100 is provided alone.

Referring to FIG. 1, the home appliance according to an embodiment of the present disclosure includes the induction heating cooktop 100. The induction heating cooktop 100 may include a casing 110 and a top plate 120.

According to the present embodiment, an exterior of the cooktop 100 may be defined by the casing 110 and the top plate 120. The casing 110 may be disposed under the top plate 120, and may constitute a front surface, a rear surface, a side surface, and a bottom surface of the cooktop 100. The top plate 120 may be disposed at a top of the cooktop 100 and may constitute an outer appearance of an upper surface of the cooktop 100. The top plate 120 may be made of ceramic glass for mounting a cooking container thereon.

An accommodation space may be formed inside the casing 110. The accommodation space formed inside the casing 110 may be opened upwardly. In an example, the casing 110 may be formed in a hexahedral shape with an open upper side. In the accommodation space surrounded with the top plate 120 and the casing 110, various internal components constituting the cooktop 100 may be accommodated.

In addition, an integral PCB pattern coil assembly 140 may be disposed under the top plate 120 in the cooktop 100. In the PCB pattern coil assembly 140, at least one heating coil for heating the cooking container via induction heating and at least one sensing coil for sensing the cooking container may be integrally formed with each other. In this regard, the assembly is not limited to meaning of mechanical coupling. The assembly may be defined as an article that is not disassembled with each other unless the article is subject to separate chemical decomposition or is cut and damaged.

For example, the PCB pattern coil assembly 140 may include a plurality of PCB pattern coil assemblies according to a size of the top plate 120 of the cooktop 100. For example, when the top plate 120 is divided into three areas including a left area, a central area, and a right area, three PCB pattern coil assemblies 140 may be respectively disposed under the corresponding areas. The PCB pattern coil assemblies 140 may be formed in different sizes to be suitable for the sizes of the left area, the central area, and the right area, respectively. Each of the PCB pattern coil assemblies 140 corresponding to each area may independently operate.

In the PCB pattern coil assembly 140, the heating coil for induction heating, the sensing coil for sensing the container, a temperature sensor for sensing a temperature, a terminal for connection with other components, etc. may be integrally formed with each other. The PCB pattern coil assembly 140 may be divided into a plurality of unit blocks. In an example, one heating coil may be disposed in one unit block. In an example, at least two sensing coils may be disposed in one unit block. In an example, two sensing coils may be disposed between adjacent unit blocks and across the two adjacent unit blocks.

In addition, in the cooktop 100, a supporter 150 may be disposed under the PCB pattern coil assembly 140. The supporter 150 may constitute a skeleton inside the cooktop 100 so as to support various internal components constituting the cooktop 100. In an example, the supporter 150 may be formed in a hexahedral shape with an open lower side. For example, the supporter 150 may be formed in a shape substantially identical with a shape obtained by turning the casing 110 upside down, and may be formed to have a slightly smaller size than that of the casing 110.

According to the present embodiment, the accommodation space may be formed inside the supporter 150, and may be formed as a space surrounded by the bottom portion of the casing 110 and the supporter 150. Various internal components constituting the cooktop 100 may be accommodated in the supporter 150.

For example, a resonant PCB assembly 160 in which capacitors used for resonance or oscillation are mounted, an inverter PCB assembly 170 in which a switching element for applying a current to the heating coil for induction heating, etc. are mounted, a fan 180 for cooling down the internal components, an EMI filter 190 for filtering and blocking various noises mixed with each other on electrical power, and a control PCB assembly in which a controller for controlling the overall operation of the cooktop 100 and circuits for sensing the cooking container are mounted may be accommodated in the supporter 190.

According to the present embodiment, the supporter 150 may also provide a base function for the PCB pattern coil assembly 140. More specifically, a ferrite core may be installed on an upper surface of the supporter 150, the PCB pattern coil assembly 140 may be installed on top of the ferrite core, and the top plate 120 may be installed on top of the PCB pattern coil assembly 140.

In addition, the cooktop 100 may include a control panel 130. The control panel 130 may be disposed on one area of an upper surface of the top plate 120. The control panel 130 may include a UI (user interface) including an adjustment icon for adjusting an operation of the cooktop 100 in a touch manner and a display for displaying an operation state of the cooktop 100.

### [PCB Pattern Coil Assembly]

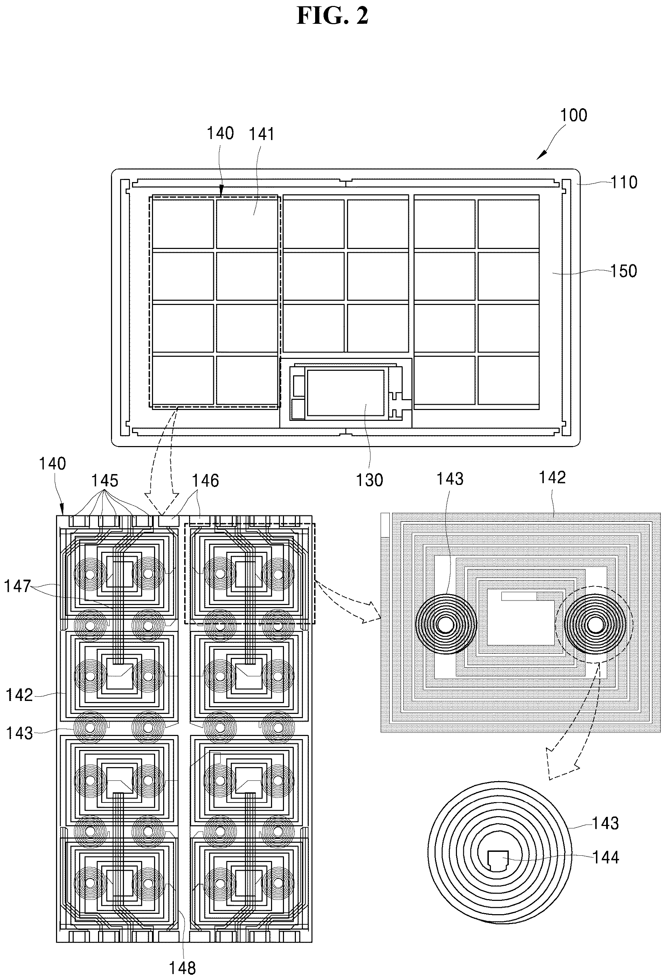

FIG. 2 is a plan view illustrating the cooktop 100 illustrated in FIG. 1 and a configuration of the PCB pattern coil assembly 140.

Referring to FIG. 2, the cooktop 100 may include the casing 110, the supporter 150, and the PCB pattern coil assembly 140. The PCB pattern coil assembly 140 includes the heating coil 142 for induction heating of the cooktop 100 and the sensing coil 143 for sensing the cooking container, and may be disposed in the accommodation space inside the cooktop 100.

The supporter 150 may be disposed on top of the casing 110, the PCB pattern coil assembly 140 may be disposed on top of the supporter 150, and the top plate 120 may be disposed on top of the PCB pattern coil assembly 140.

The PCB pattern coil assembly 140 may include a plurality of PCB pattern coil assemblies according to the size and shape of the cooktop 100. In the present embodiment, it is illustrated that the cooktop 100 is divided into the left area, the central area, and the right area, and includes three PCB pattern coil assemblies 140 corresponding thereto. Each of the PCB pattern coil assemblies 140 may include a plurality of heating coils 142 and a plurality of sensing coils 143.

Each of the PCB pattern coil assemblies 140 may be divided into a plurality of unit blocks 141. The plurality of unit blocks 141 may be arranged in a matrix form. For example, at least one heating coil 142 may be disposed in one unit block 141. For example, at least two sensing coils 143 may be disposed in one unit block 141. In addition, at least two sensing coils 143 may be disposed between adjacent two unit blocks 141 and across the adjacent two unit blocks 141.

Each of the heating coil 142 and the sensing coil 143 formed in the PCB pattern coil assembly 140 may be disposed in a pattern form on a board. In an example, the heating coil 142 may be formed in a polygonal, for example, a square, a rectangular, or a hexagonal pattern. Alternatively, the heating coil 142 may be formed in an annular pattern. For example, the sensing coil 143 may be formed in a circular pattern. Alternatively, the sensing coil 143 may be formed in a circular, square, rectangular, or hexagonal pattern.

In addition, at least one heating coil terminal 145, at least one connector 146, at least one heating coil wiring 147, at least one sensing wiring 148, and at least one via may be formed in the PCB pattern coil assembly 140. The heating coil terminal 145 is electrically connected to the heating coil 142 via the heating coil wiring 147, and is electrically connected to the resonant PCB assembly 160 and the inverter PCB assembly 170. The connector 146 is electrically connected to the sensing coil 143 via the sensing wiring 148, and is electrically connected to the resonant PCB assembly 160 and the control PCB assembly.

As described above, not only the heating coil 142 but also the sensing coil 143 may be formed in the unit block 141 of the PCB pattern coil assembly 140. In the unit block 141, a plurality of sensing coils 143 are arranged along a front-rear direction, and a plurality of sensing coils 143 are also arranged in a lateral direction.

The PCB pattern coil assembly 140 may include a PCB (hereinafter, referred to as a "heating coil PCB") on which the heating coil 142 is patterned and a PCB (hereinafter, referred to as a "sensing coil PCB") on which the sensing coil 143 is patterned. The PCB pattern coil assembly 140 may be formed in a form in which the heating coil PCB and the sensing coil PCB are stacked in an up-down direction. In one example, the heating coil PCB may be formed in a form in which 10 to 12 layers are stacked, and the heating coils 142 of the layers may be electrically connected to each other via the via. In one example, the sensing coil PCB may be formed in a form in which two layers are stacked, and the sensing coils 143 of the layers may be electrically connected to each other via the via.

In addition, at least one of the heating coil PCB and the sensing coil PCB may be provided in a form in which the coil is patterned on each of both opposite surfaces of the board. In the present embodiment, it is illustrated that the heating coil 142 is patterned on each of both opposing surfaces of the heating coil PCB, and the sensing coil 143 is patterned on each of both opposing surfaces of the sensing coil PCB.

Each of the sensing coils 143 may be disposed to overlap an area where each of the heating coils 142 is formed. In addition, each of the sensing coils 143 may be disposed to overlap an area between two adjacent areas where the two heating coils 142 are formed, respectively.

In the present embodiment, it is illustrated that two sensing coils 143 are disposed in the area where each heating coil 142 is formed, and two sensing coils 143 are disposed between the two heating coils 142 adjacent to each other in the front-rear direction. In addition, a temperature sensor 144 may be provided in the PCB pattern coil assembly 140. In one example, the temperature sensor 144 may be disposed in a center portion of an area of each sensing coil 143.

In an example, the PCB pattern coil assembly 140 may be provided in a form in which the heating coil 142, the sensing coil 143, and the temperature sensor 144 are integrally formed with each other. For example, the PCB pattern coil assembly 140 may be formed in a form in which the heating coil PCB having the heating coil 142 and the sensing coil PCB having the sensing coil 143 and the temperature sensor 144 are stacked. The PCB pattern coil assembly 140 may be provided in a form including one or more pattern coil PCBs.

As described above, the PCB pattern coil assembly 140 has a structure in which a plurality of heating coils 142 for induction heating and a plurality of sensing coils 143 for sensing the cooking container mounted on the ceramic glass are integrally formed with each other using the patterns printed on the PCB. The number of heating coils 142 and sensing coils 143 may be determined based on the size of the cooktop 100.

For example, the integrated PCB pattern coil assembly 140 may include heating coil patterns arranged in 10 layers, sensing coil patterns arranged in two layers, and an electrical insulating material disposed between each heating coil pattern and each sensing coil pattern adjacent to each other to electrically insulate each heating coil pattern and each sensing coil pattern from each other. The electrical insulating material may be formed by curing a prepreg made of a thermosetting resin generally used to form a printed circuit board and glass fibers. For example, the thermosetting resin may be preferably an epoxy resin-based thermosetting resin. Specifically, the epoxy resin-based thermosetting resin may be FR-4.

As described above, the electrical insulating material made of the prepreg may be disposed between adjacent ones of the heating coil patterns respectively disposed in the multiple layers to electrically insulate the adjacent ones from each other, and may be disposed between the adjacent sensing coil patterns to electrically insulate adjacent ones of the sensing coil patterns respectively disposed in the multiple layers from each other. In addition, the electrical insulating material may be constructed to fill an area in which the patterns such as the heating coil pattern and the sensing coil pattern are absent, and may serve to form a layered structure of an individual layer.

Therefore, based on the heating coil pattern and the sensing coil pattern, the PCB pattern coil assembly 140 may have the multilayer structure having a total of 12 layers from a first layer as the uppermost layer to a twelfth layer as the lowermost layer along the up-down direction.

As described above, the heating coil pattern and the sensing coil pattern according to the embodiment of the present disclosure are formed into then integrated PCB pattern coil assembly composed of a plurality of layers, thereby contributing to the simplification of processes such as masking, printing, and etching.

### [Connection Structure between Heating Coils of PCB Pattern Coil Assembly]

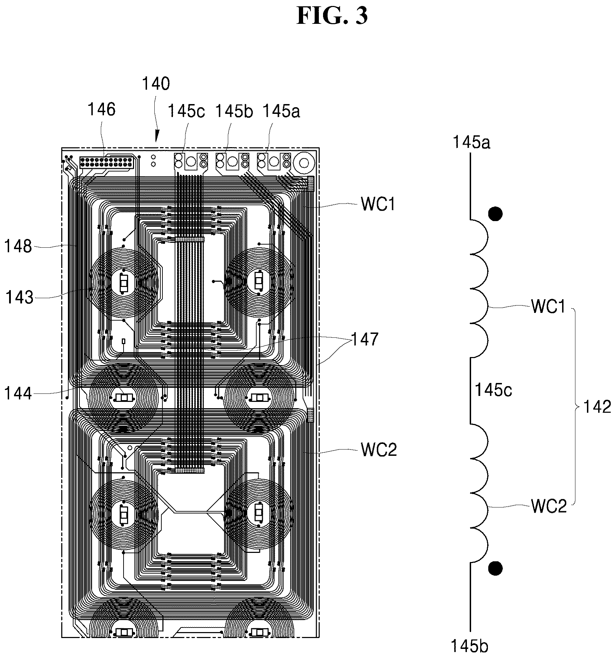

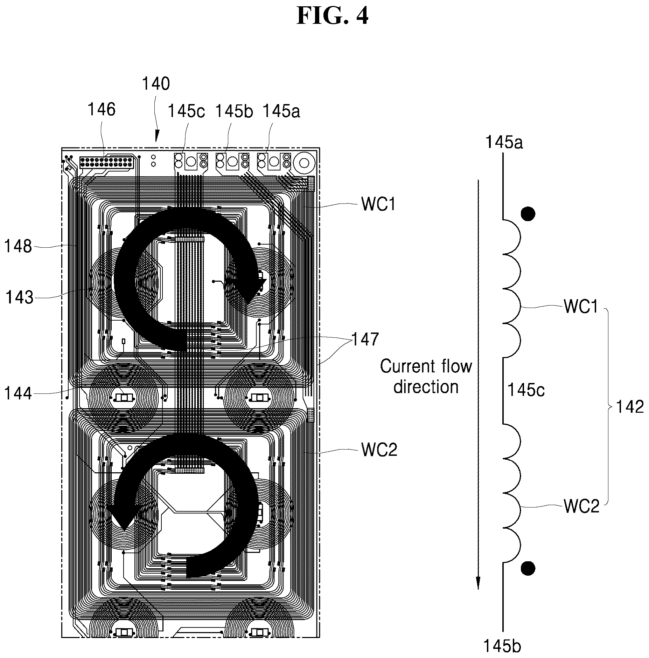

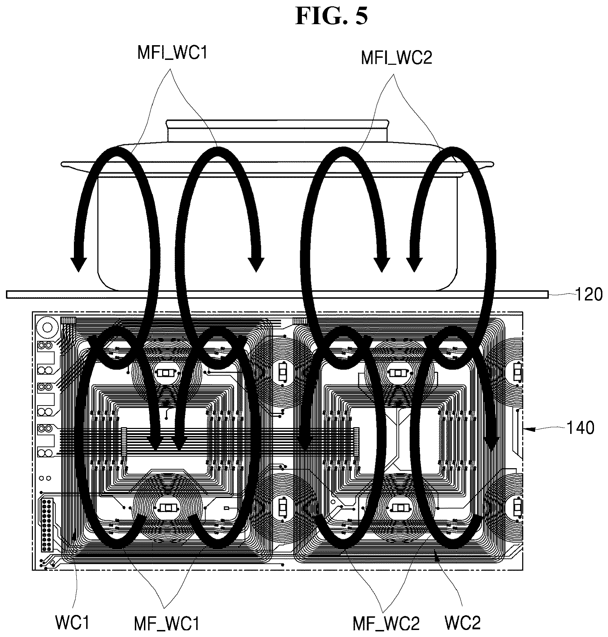

FIG. 3 is a diagram illustrating a connection structure between heating coils connected in series to each other in a home appliance according to an embodiment of the present disclosure. FIG. 4 is a diagram illustrating a current direction of each of heating coils connected in series to each other in a home appliance according to an embodiment of the present disclosure. FIG. 5 is a diagram showing a magnetic field direction generated by heating coils and a magnetic field direction generated via electromagnetic induction in a home appliance according to an embodiment of the present disclosure.

Referring to FIGS. 3 to 5, in the home appliance according to an embodiment, the PCB pattern coil assembly 140 includes a first heating coil WC1, a second heating coil WC2, a first heating coil terminal 145a, a second heating coil terminal 145b, and a third heating coil terminal 145c.

In addition, the PCB pattern coil assembly 140 further includes a plurality of sensing coils 143, a plurality of temperature sensors 144, and the connector 146.

The first heating coil WC1 is connected to the first heating coil terminal 145a via a wiring. The first heating coil WC1 is formed in a pattern in which it is wound inwardly toward an inner center thereof in a clockwise direction. A current is applied to the first heating coil terminal 145a. The current applied to the first heating coil terminal 145a flows in the clockwise direction along the form of the pattern of the first heating coil WC1.

The second heating coil WC2 is connected to the second heating coil terminal 145b via a wiring. The second heating coil WC2 is formed in a pattern in which it is wound from an inner center thereof outwardly in a counterclockwise direction. A ground voltage is applied to the second heating coil terminal 145b. The second heating coil WC2 is connected in series to the first heating coil WC1 and receives the current from the first heating coil WC1. The current of the second heating coil WC2 flows in the counterclockwise direction along the form of the pattern of the second heating coil WC2.

The first heating coil WC1 and the second heating coil WC2 are connected in series to each other. For example, the first heating coil WC1 and the second heating coil WC2 are connected in series to each other via a wiring intersecting a center of the first heating coil WC1 and a center of the second heating coil WC2. An inner terminal of the first heating coil WC1 and an inner terminal of the second heating coil WC2 are connected to the third heating coil terminal 145c via a wiring intersecting the center of the first heating coil WC1 and the center of the second heating coil WC2.

The first heating coil terminal 145a, the second heating coil terminal 145b, and the third heating coil terminal 145c are disposed at one side of the PCB pattern coil assembly 140. For example, the third heating coil terminal 145c is disposed at one side of the PCB pattern coil assembly 140, and the first heating coil terminal 145a and the second heating coil terminal 145b are disposed at the right side around the third heating coil terminal 145c.

The connector 146 is disposed at one side of the PCB pattern coil assembly 140 as the first heating coil terminal 145a, the second heating coil terminal 145b, and the third heating coil terminal 145c are disposed at one side of the PCB pattern coil assembly 140. The connector 146 is disposed at the left side around the third heating coil terminal 145c. Alternatively, the first heating coil terminal 145a and the second heating coil terminal 145b may be disposed at the left side around the third heating coil terminal 145c, while the connector 146 may be disposed at the right side around the third heating coil terminal 145c.

The first heating coil terminal 145a is connected to an output terminal of the inverter circuit provided in the inverter PCB assembly 170. A first resonant capacitor may be further disposed between and connected to the first heating coil terminal 145a and the output terminal of the inverter circuit.

The current applied from the inverter circuit resonates at a resonance frequency determined based on the first heating coil WC1 and the first resonant capacitor, and is supplied to the first heating coil WC1 via the first heating coil terminal 145a.

The current of the first heating coil WC1 flows clockwise along the pattern of the first heating coil WC1 wound inwardly into the inner center thereof in the clockwise direction.

The second heating coil terminal 145b is connected to a ground voltage terminal. A second resonant capacitor may be further disposed between and connected to the second heating coil terminal 145b and the ground voltage terminal.

The first heating coil terminal 145a, the first heating coil WC1, the second heating coil WC1, and the second heating coil terminal 145b constitute a current path. The current output from the inverter circuit flows through the first heating coil terminal 145a, the first heating coil WC1, the second heating coil WC1, and the second heating coil terminal 145b. In this regard, the current of the first heating coil WC1 flows in the clockwise direction, and the current of the second heating coil WC2 flows in the counterclockwise direction.

The first heating coil WC1 and the second heating coil WC2 may be connected in series to each other so that currents of the first heating coil WC1 and the second heating coil WC2 flow in opposite directions, thereby respectively generating magnetic fields MF_WC1 and MF_WC2 in opposite directions such that the magnetic fields cancel each other out.

The first heating coil WC1 and the second heating coil WC2 may be connected in series to each other such that opposite polarities thereof are connected to each other, thereby generating magnetic fields MF_WC1 and MF_WC2 in opposite directions such that that magnetic fields cancel each other out.

The first heating coil WC1 and the second heating coil WC2 generate the respective magnetic fields MF_WC1 and MF_WC2 in the opposite directions such that the magnetic field directions cancel each other out, thereby generating magnetic fields MFI_WC1 and MFI_WC2 in the container via electromagnetic induction. Thus, the eddy currents generated in the container under the magnetic fields MFI_WC1 and MFI_WC2 may superpose with each other. This increases the heating performance and efficiency of the home appliance.

The third heating coil terminal 145c may be connected to the centers of the first heating coil WC1 and the second heating coil WC2. The third heating coil terminal 145c may be disposed at a middle point of one side of the PCB pattern coil assembly 140 so as to be connected to the centers of the first heating coil WC1 and the second heating coil WC2.

The first heating coil terminal 145a and the second heating coil terminal 145b may be disposed at the right side around the third heating coil terminal 145c. Alternatively, the first heating coil terminal 145a and the second heating coil terminal 145b may be disposed at the left side around the third heating coil terminal 145c.

The connector 146 may be disposed at the left side around the third heating coil terminal 145c. Alternatively, the connector 146 may be disposed at the right side around the third heating coil terminal 145c. The connector 146 may have multiple connection ports. The plurality of sensing coils 143 and the plurality of temperature sensors 144 may be connected to corresponding connection ports of the connector 146 via respective sensing wrings 148.

An outer terminal of the first heating coil WC1 is connected to the first heating coil terminal 145a, and an inner terminal of the first heating coil WC1 is connected to the third heating coil terminal 145c via a heating coil wiring 147 intersecting the center of the first heating coil WC1. Using this connection structure, the heating coil wiring connected to the first heating coil terminal 145a and the outer terminal of the first heating coil WC1 and the heating coil wiring connected to the second heating coil terminal 145b and the outer terminal of the second heating coil WC2 have an optimal arrangement structure.

The third heating coil terminal 145c is connected to the inner terminal of the first heating coil WC1 and the inner terminal of the second heating coil WC2 via the heating coil wiring 147 intersecting the centers of the first heating coil WC1 and the second heating coil WC2. The third heating coil terminal 145c is disposed at one side of the PCB pattern assembly 140. This connection and arrangement structure implements an optimal wiring route.

The first heating coil terminal 145a and the second heating coil terminal 145b are disposed at the left or right side around the third heating coil terminal 145c. This arrangement structure may secure a space for receiving the wirings for the plurality of sensing coils 143 and the plurality of temperature sensors 144.

In addition, the first heating coil terminal 145a and the second heating coil terminal 145b respectively connected to the first heating coil WC1 and the second heating coil WC2 connected in series to each other are disposed at the same side, such that a space for receiving the wirings for the plurality of sensing coils 143 and the plurality of temperature sensors 144 may be secured.

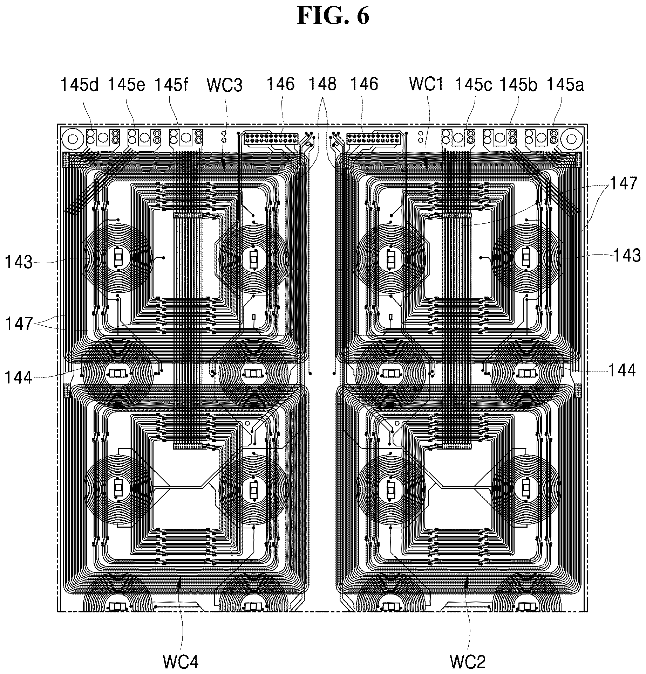

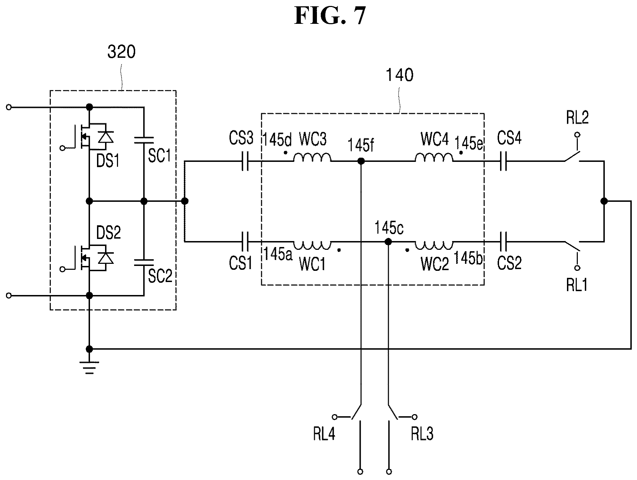

FIG. 6A is a diagram illustrating a connection structure between heating coils connected in series and in parallel with each other in a home appliance according to an embodiment of the present disclosure. FIG. 6B is a circuit diagram illustrating a connection state between heating coils connected in series and parallel with each other and an inverter circuit in a home appliance according to an embodiment of the present disclosure. FIG. 6C is a circuit diagram illustrating a connection state between heating coils and heating coil terminals in a home appliance according to an embodiment of the present disclosure. FIG. 7 is a diagram illustrating a current direction of each of heating coils connected in series and parallel with each other in a home appliance according to an embodiment of the present disclosure.

As shown in FIGS. 6A to 7, in the home appliance according to an embodiment, the PCB pattern coil assembly 140 includes the first heating coil WC1, the second heating coil WC2, a third heating coil WC3, and a fourth heating coil WC4.

The first heating coil WC1 is connected to the first heating coil terminal 145a, and is formed in a pattern in which it is wound inwardly toward an inner center thereof in a clockwise direction. The second heating coil WC2 is connected to the second heating coil terminal 145b, and is formed in a pattern in which it is wound from an inner center thereof outwardly in a counterclockwise direction.

The third heating coil WC3 is connected to a fourth heating coil terminal 145d, and is formed in a pattern in which it is wound from an inner center thereof outwardly in a counterclockwise direction. The fourth heating coil WC4 is connected to a fifth heating coil terminal 145e and is formed in a pattern in which it is wound inwardly toward an inner center thereof in the clockwise direction.

The first heating coil WC1 and the second heating coil WC2 are connected in series to each other, and the third heating coil WC3 and the fourth heating coil WC4 are connected in series to each other. The first heating coil WC1 and the second heating coil WC2 connected in series to each other, and the third heating coil WC3 and the fourth heating coil WC4 connected in series to each other are connected in parallel to each other.

For example, the inner terminal of the first heating coil WC1 and the inner terminal of the second heating coil WC2 are connected in series to each other via the heating coil wiring intersecting the centers of the first heating coil WC1 and the second heating coil WC2. The inner terminal of the third heating coil WC3 and the inner terminal of the fourth heating coil WC4 are connected in series to each other via the heating coil wiring intersecting the centers of the third heating coil WC3 and the fourth heating coil WC4. The first heating coil WC1 and the third heating coil WC3 are connected to the output terminal of the inverter circuit 320 via the first heating coil terminal 145a and the fourth heating coil terminal 145d, respectively. The second heating coil WC2 and the fourth heating coil WC4 are connected to the ground voltage terminal via the second heating coil terminal 145b and the fifth heating coil terminal 145e, respectively.

The first heating coil WC1 receives the current supplied from the inverter circuit 320 via the first heating coil terminal 145a. In this regard, the current of the first heating coil WC1 flows in the clockwise direction along the heating coil pattern wound inwardly toward the inner center thereof in the clockwise direction.

The second heating coil WC2 receives the current supplied from the first heating coil WC1 via the inner terminal thereof. In this regard, the current of the second heating coil WC2 flows in the counterclockwise direction along the heating coil pattern wound from the inner center thereof outwardly in the counterclockwise direction.

The third heating coil WC3 receives the current supplied from the inverter circuit 320 via the fourth heating coil terminal 145d. In this regard, the current of the third heating coil WC3 flows in the counterclockwise direction along the heating coil pattern wound inwardly toward the inner center thereof in the counterclockwise direction.

The fourth heating coil WC4 receives the current supplied from the third heating coil WC3 via the inner terminal thereof. In this regard, the current of the fourth heating coil WC4 flows in a clockwise direction along the heating coil pattern wound from the inner center thereof outwardly in the clockwise direction.

As described above, the current of the first heating coil WC1 flows in the direction opposite to the direction of the current of each of the second heating coil WC2 adjacent thereto in the front-rear direction and the third heating coil WC3 adjacent thereto in the left-right direction. In addition, the current of the fourth heating coil WC1 flows in the direction opposite to the direction of the current of each of the second heating coil WC2 adjacent thereto in the left-right direction and the third heating coil WC3 adjacent thereto in the front-rear direction.

In addition, the first heating coil WC1 and the second heating coil WC2 are connected to each other such that opposite polarities thereof are connected to each other. The third heating coil WC3 and the fourth heating coil WC4 are connected to each other such that opposite polarities thereof are connected to each other.

In addition, the PCB pattern coil assembly 140 includes the first heating coil terminal 145a, the second heating coil terminal 145b, the third heating coil terminal 145c, a fourth heating coil terminal 145d, a fifth heating coil terminal 145e, and a sixth heating coil terminal 145f. In addition, the PCB pattern coil assembly 140 further includes the plurality of sensing coils 143, the plurality of temperature sensors 144, and the connector 146.

The first heating coil terminal 145a, the second heating coil terminal 145b, the third heating coil terminal 145c, the fourth heating coil terminal 145d, the fifth heating coil terminal 145e, the sixth heating coil terminal 145f, and the connector 146 are disposed at one side of the PCB pattern coil assembly 140.

For example, the first heating coil terminal 145a and the second heating coil terminal 145b are disposed at the right side around the third heating coil terminal 145c, and the connector 146 is disposed at the left side around the third heating coil terminal 145c. The fourth heating coil terminal 145d and the fifth heating coil terminal 145e are disposed at the left side around the sixth heating coil terminal 145f, and the connector 146 is disposed at the right side around the sixth heating coil terminal 145f.

The inverter circuit 320 includes a plurality of switching elements, for example, a first switching element DS1 and a second switching element DS2. The first switching element DS1 and the second switching element DS2 are connected in series to each other and disposed between and connected to a high potential voltage terminal and a low potential voltage terminal. The inverter circuit 320 outputs a resonant current according to switching operation of the first switching element DS1 and the second switching element DS2.

The inverter circuit 320 supplies the resonant current to the first heating coil WC1 and the second heating coil WC2 or the third heating coil WC3 and the fourth heating coil WC4 according to the switching operation of the first switching element DS1 and the second switching element DS2. The resonance frequency of the resonant current is determined based on an inductance value of the heating coil and a capacitance value of the resonant capacitor.

The first switching element DS1 and the second switching element DS2 may be alternately turned on and off under the control of the controller. The alternating turn-on and turn-off of the first switching element DS1 and the second switching element DS2 may be referred to as the switching operation of the first switching element DS1 and the second switching element DS2.

The resonant current is generated via the switching operation of the first switching element DS1 and the second switching element DS2. The magnetic field is generated when the resonant current is supplied to the heating coil. Thus, an eddy current flows in the container provided on top of the heating coil via the electromagnetic induction to heat the container.

The inverter circuit 320 further includes a first snubber capacitor CS1 and a second snubber capacitor CS2. The first snubber capacitor CS1 is connected in parallel with the first switching element DS1, and the second snubber capacitor CS2 is connected in parallel with the second switching element SW2. The first snubber capacitor CS1 and the second snubber capacitor CS2 are connected in series to each other.

The first snubber capacitor CS1 and the second snubber capacitor CS2 serve to reduce power loss due to hard switching occurring when the first switching element DS1 and the second switching element DS2 are turned off.

A first resonant capacitor CS1 may be further disposed between and connected to an output terminal of the inverter circuit 320 and the first heating coil WC1. In addition, a second resonant capacitor CS2 and a first relay RL1 may be further disposed between and connected to the second heating coil WC2 and the ground voltage terminal.

In addition, a third resonant capacitor CS3 may be further disposed between and connected to the output terminal of the inverter circuit 320 and the third heating coil WC3. In addition, a fourth resonant capacitor CS4 and a second relay RL2 may be further disposed between and connected to the fourth heating coil WC4 and the ground voltage terminal.

In addition, a third relay RL3 may be further disposed between and connected to the third heating coil terminal 145c and other heating coils of the PCB pattern coil assembly 140. In addition, a fourth relay RL4 may be further disposed between and connected to the sixth heating coil terminal 145f and other heating coils of the PCB pattern coil assembly 140.

At least one of the first relay RL1, the second relay RL2, the third relay RL3, and the fourth relay RL4 may be turned on based on a size of the container to form a current path.

For example, when the first relay RL1 is turned on, the currents flowing in opposite directions respectively flow through the first heating coil WC1 and the second heating coil WC2 to generate the magnetic fields cancelling out each other. Thus, the magnetic fields are generated in the container via the electromagnetic induction. In this regard, the first heating coil WC1 and the second heating coil WC2 respectively generate the magnetic fields MF_WC1 and MF_WC2 in the magnetic field directions such that the magnetic fields MF_WC1 and MF_WC2 cancel each other out. The eddy currents respectively generated under the magnetic fields MF_WC1 and MF_WC2 in the container may superimpose on each other, thereby increasing the heating performance and efficiency of the home appliance.

When the first relay RL1 and the second relay RL2 are turned on, the currents flowing in opposite directions respectively flow through the first heating coil WC1 and the second heating coil WC2 to generate the magnetic fields cancelling out each other, while the currents flowing in opposite directions respectively flow through the third heating coil WC3 and the fourth heating coil WC4 to generate the magnetic fields cancelling out each other. Thus, the magnetic fields are generated in the container via the electromagnetic induction. In this regard, the first heating coil WC1 and the second heating coil WC2 respectively generate the magnetic fields MF_WC1 and MF_WC2 in the magnetic field directions such that the magnetic fields MF_WC1 and MF_WC2 cancel each other out. The eddy currents respectively generated under the magnetic fields MF_WC1 and MF_WC2 in the container may superimpose on each other, thereby increasing the heating performance and efficiency of the home appliance. Further, the third heating coil WC3 and the fourth heating coil WC4 respectively generate the magnetic fields MF_WC3 and MF_WC4 in the magnetic field directions such that the magnetic fields MF_WC3 and MF_WC4 cancel each other out. The eddy currents respectively generated under the magnetic fields MF_WC3 and MF_WC4 in the container may superimpose on each other, thereby increasing the heating performance and efficiency of the home appliance.

As described above, according to the present disclosure, the heating coils connected in series to each other the heating coils adjacent to each other in the front-rear direction, and/or the heating coils adjacent to each other in the left-right direction are connected to each other such that the opposite polarities thereof are connected to each other so that the currents thereof flow in the opposite directions, such that the magnetic fields generated therefrom cancel each other out. Thus, the eddy currents respectively generated under the magnetic fields in the container may superimpose on each other each other, thereby increasing the heating performance and efficiency of the home appliance.

### [Inverter Circuit and Load Circuit]

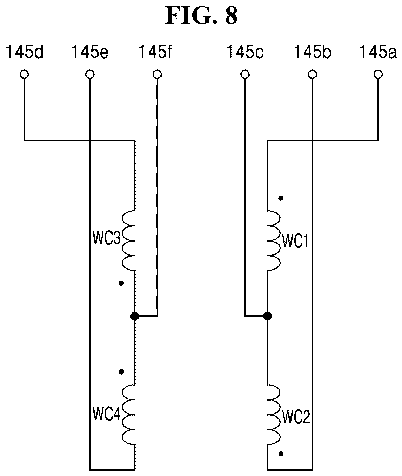

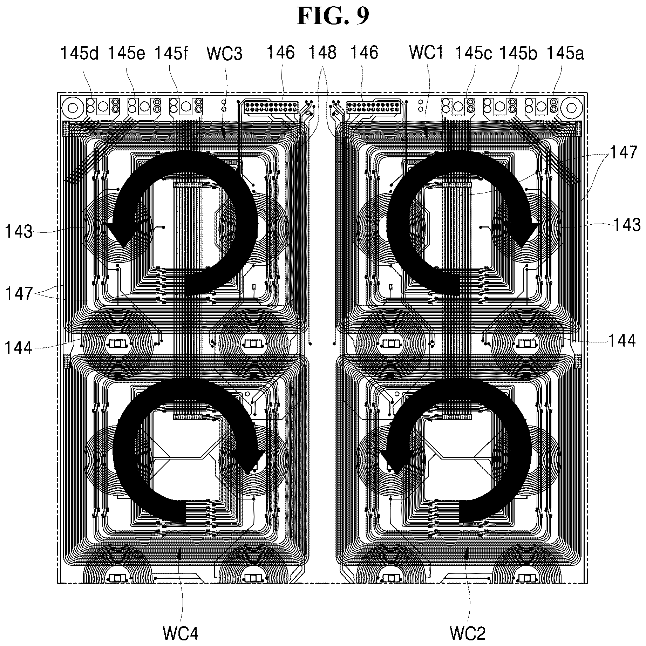

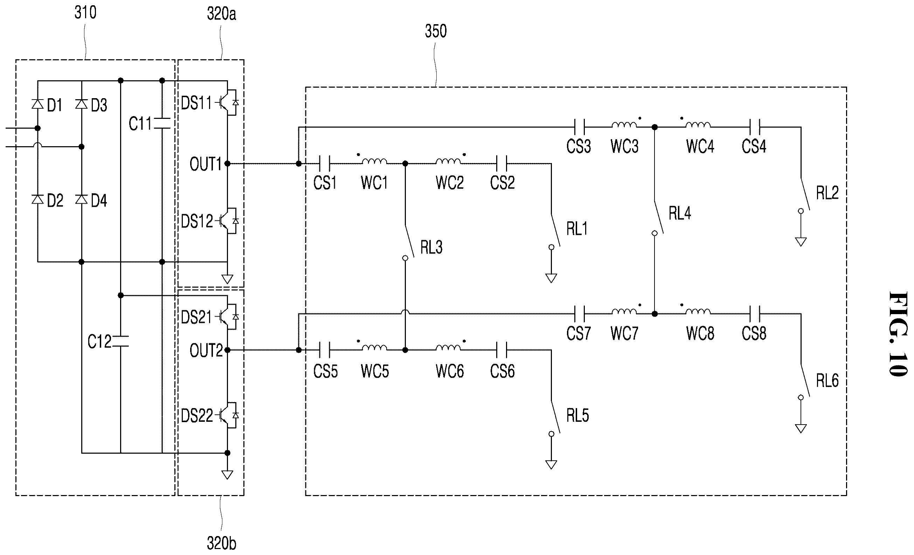

FIG. 8 is a diagram illustrating the rectifier circuit 310, a first inverter circuit 320a, a second inverter circuit 320b, and the load circuit 350 in a home appliance according to an embodiment of the present disclosure.

The rectifier circuit 310 converts an AC voltage having the magnitude and polarity (positive voltage or negative voltage) changing over time into a DC voltage having a constant magnitude and polarity, and converts an AC current having the magnitude and direction (positive current or negative current) changing over time into a DC current having a constant magnitude.

The rectifier circuit 310 may include a bridge diode. Specifically, the rectifier circuit 310 includes four diodes D1, D2, D3, and D4. The diodes D1, D2, D3, and D4 constitute two diode pairs D1 and D2, and D3, and D4, the two diodes of each pair being connected in series to each other, and the two diode pairs D1 and D2, D3, and D4 are connected in parallel with each other. The bridge diode converts an AC voltage of which the polarity changes over time into a positive voltage having a constant polarity over time, and converts an AC current of which the direction changes over time into a positive current having a constant direction over time.

In addition, the rectifier circuit 310 includes a DC connection capacitor C1. The DC connection capacitor C1 converts a positive voltage whose magnitude changes over time into a DC voltage having a constant magnitude over time.

The inverter circuit 320a and 320b include the first inverter circuit 320a and the second inverter circuit 320b. The first inverter circuit 320a supplies a first resonant current to the load circuit 350 through a first output terminal OUT1 according to the switching operation of the switching elements DS11 and DS12. The second inverter circuit 320b supplies a second resonant current to the load circuit 350 through a second output terminal OUT2 according to the switching operation of the switching elements DS21 and DS22.

The load circuit 350 may include at least one resonant capacitor CS1, CS2, CS3, CS4, CS5, CS6, CS7, and CS8, at least one heating coil WC1, WC2, WC3, WC4, WC5, WC6, WC7, and WC8, and at least one relay RL1, RL2, RL3, RL4, RL4, and RL6 that are connected in series or in parallel with each other.

The resonant capacitor CS1, CS2, CS3, CS4, CS5, CS6, CS7, and CS8 may be used to filter a DC component from the driving current. The heating coil WC1, WC2, WC3, WC4, WC5, WC6, WC7, and WC8 may be used to heat the cooking container using electromagnetic induction. The relay RL1, RL2, RL3, RL4, RL4, and RL6 may be used to selectively connect the heating coils WC1, WC2, WC3, WC4, WC5, WC6, WC7, and WC8 in series or in parallel with each other. In addition, the heating coil WC1, WC2, WC3, WC4, WC5, WC6, WC7, and WC8 and the capacitor CS1, CS2, CS3, CS4, CS5, CS6, CS7, and CS8 may be used to determine the resonance frequency of the driving current.

The load circuit 350 may include a first resonant capacitor CS1 configured to transmit the first resonant current supplied from the first inverter circuit 320a, a first heating coil WC1 connected in series to the first resonant capacitor CS1, a second heating coil WC2 connected in series to the first heating coil WC1, a second resonant capacitor CS2 connected in series to the second heating coil WC2, and a first relay RL1 configured to connect or disconnect the second resonant capacitor CS2 and the ground voltage terminal to or from each other.

In addition, the load circuit 350 may further include a third resonant capacitor CS3 configured to transmit the first resonant current supplied from the first inverter circuit 320a, a third heating coil WC3 connected in series to the third resonant capacitor CS3, a fourth heating coil WC4 connected in series to the third heating coil WC3, a fourth resonant capacitor CS4 connected in series to the fourth heating coil WC4, and a second relay RL2 configured to connect or disconnect the fourth resonant capacitor CS4 and the ground voltage terminal to or from each other.

In addition, the load circuit 350 may further include a third relay RL3 for switching connection or disconnection between a node between the first heating coil WC1 and the second heating coil WC2 and a node between the fifth heating coil WC5 and the sixth heating coil WC6 to or from each other.

Additionally, the load circuit 350 may further include a fourth relay RL4 that switches connection or disconnection between a node between the third heating coil WC3 and the fourth heating coil WC4 and a node between the seventh heating coil WC7 and the sixth heating coil WC6.

In addition, the load circuit 350 may further include a fifth resonant capacitor CS5 configured to transmit the second resonant current supplied from the second inverter circuit 320b, a fifth heating coil WC5 connected in series to the fifth resonant capacitor CS5, a sixth heating coil WC6 connected in series to the fifth heating coil WC5, a sixth resonant capacitor CS6 connected in series to the sixth heating coil WC6, and a fifth relay RL5 configured to connect or disconnect the sixth resonant capacitor CS6 and the ground voltage terminal.

In addition, the load circuit 350 may further include a seventh resonant capacitor CS7 configured to transmit the second resonant current supplied from the second inverter circuit 320b, a seventh heating coil WC7 connected in series to the seventh resonant capacitor WC7, an eighth heating coil WC8 connected in series to the seventh heating coil CS7, an eighth resonant capacitor CS8 connected in series to the eighth heating coil WC7, and a sixth relay RL6 configured to connect or disconnect the eighth resonant capacitor CS8 and the ground voltage terminal to or from each other.

The first to sixth relays RL1, RL2, RL3, RL4, RL5, and RL6 may be selectively turned on according to the size of the container.

For example, when the first relay RL1 and the third relay RL3 are turned on, the current may flow through each of the first heating coil WC1, the second heating coil WC3, and the fifth heating coil WC5. At this time, the currents of the first heating coil WC1 and the second heating coil WC2 flow in opposite directions, and the currents of the second heating coil WC2 and the fifth heating coil WC5 flow in opposite directions.

In addition, for example, when the second relay RL2 and the fourth relay RL 4 are turned on, the current may flow through each of the third heating coil WC3, the fourth heating coil WC4, and the seventh heating coil WC5. At this time, the currents of the third heating coil WC3 and the fourth heating coil WC4 flow in opposite directions, and the currents of the fourth heating coil WC2 and the seventh heating coil WC7 flow in opposite directions.

As described above, according to the present disclosure, the currents respectively flowing in the heating coils connected in series to each other have the opposite flow directions to each other, thereby generating the respective magnetic fields having the directions in which the magnetic fields cancel each other out.

In addition, according to the present disclosure, the heating coils are connected in series to each other such that opposite polarities thereof are connected to each other, thereby generating the respective magnetic fields having the directions in which the magnetic fields cancel each other out.

In addition, according to the present disclosure, the respective magnetic fields have the directions in which the magnetic fields cancel each other out, such that the eddy currents in the container superimpose on each other, thereby increasing heating performance and efficiency of the home appliance.

A home appliance according to one embodiment of the present disclosure may include: a first heating coil terminal; a first heating coil connected to the first heating coil terminal and formed in a pattern wound inwardly toward an inner center thereof in a clockwise direction; a second heating coil terminal; a second heating coil connected to the second heating coil terminal and formed in a pattern wound from an inner center thereof outwardly in a counterclockwise direction; and a third heating coil terminal disposed between and connected to the first heating coil and the second heating coil.

In accordance with one embodiment, the first heating coil and the second heating coil may be connected to each other such that opposite polarities thereof are connected to each other.

In accordance with one embodiment, the first heating coil and the second heating coil may be connected to each other such that a flow direction of a current flowing in the first heating coil and a flow direction of a current flowing in the second heating coil are opposite to each other.

In accordance with one embodiment, the first heating coil terminal may be connected to an output terminal of an inverter circuit.

In accordance with one embodiment, the second heating coil terminal may be connected to a ground voltage terminal.

In accordance with one embodiment, the home appliance may further include: a first resonant capacitor disposed between and connected to the first heating coil terminal and an output terminal of the inverter circuit; and a second resonant capacitor disposed between and connected to the second heating coil terminal and the ground voltage terminal.

In accordance with one embodiment, the third heating coil terminal may be connected to a center of the first heating coil and a center of the second heating coil.

In accordance with one embodiment, the first heating coil and the second heating coil may be formed into an integral PCB pattern assembly.

In accordance with one embodiment, the PCB pattern assembly may include heating coil PCBs of a plurality of layers, wherein a heating coil pattern may be formed on at least one of an upper surface or a lower surface of the heating coil PCB of each of the layers.

In accordance with one embodiment, the first heating coil terminal, the second heating coil terminal, and the third heating coil terminal may be formed at at least one of a front side or a rear aide of the PCB pattern assembly

In accordance with one embodiment, the third heating coil terminal may be disposed at a middle point of one side of the PCB pattern assembly, wherein the first heating coil terminal and the second heating coil terminal may be disposed at a left side or a right side around the middle point of the one side thereof.

In accordance with one embodiment, the PCB pattern assembly further may include sensing coil PCBs of a plurality of layers, wherein a plurality of sensing coils may be formed on at least one of an upper surface or a lower surface of the sensing coil PCB of each of the layer, wherein each of the plurality of sensing coils may be wound in a circular pattern.

In accordance with one embodiment, the sensing coil PCBs may be disposed on top of the heating coil PCBs, wherein the sensing coil PCBs and the heating coil PCBs may be formed into the integral PCB pattern assembly.

In accordance with one embodiment, a temperature sensor may be disposed at a center of each of the plurality of sensing coils.

In accordance with one embodiment, a connector having a plurality of connection ports may be disposed at a right side or a left side around a middle point of one side of the PCB pattern assembly, wherein the plurality of sensing coils and the temperature sensor may be respectively connected to respective connection ports of the connector via respective sensing wirings, wherein the first heating coil and the second heating coil may be connected in series to each other via a heating coil wiring intersecting the first heating coil and the second heating coil.

A home appliance according to one embodiment of the present disclosure may include an integral PCB pattern assembly in which a plurality of heating coils are disposed. The PCB pattern assembly may include first and second heating coils adjacent to each other in the front-rear direction. The first heating coil is formed in a pattern in which it is wound inwardly to an inner center thereof in a clockwise direction such that the current flows inwardly to the inner center thereof in a clockwise direction. The second heating coil is formed in a pattern in which it is wound from an inner center thereof outwardly in a counterclockwise direction such that the current flows from the inner center thereof outwardly in a counterclockwise direction.

In accordance with one embodiment, the PCB pattern assembly may further include; a third heating coil adjacent to the first heating coil in the left-right direction and formed in a pattern in which it is wound from an inner center thereof outwardly in a counterclockwise direction such that the current flows from the inner center thereof outwardly in a counterclockwise direction; and a fourth heating coil adjacent to the second heating coil in the left-right direction and formed in a pattern in which it is wound inwardly to an inner center thereof in a clockwise direction such that the current flows inwardly to the inner center thereof in a clockwise direction.

In an embodiment, the first heating coil and the second heating coil may be connected to each other such that the opposite polarities of the first heating coil and the second heating coil are connected to each other. The third heating coil and the fourth heating coil may be connected to each other such that the opposite polarities of the third heating coil and the fourth heating coil are connected to each other.

In an embodiment, the home appliance may further include a first heating coil terminal connected to the first heating coil, a second heating coil terminal connected to the second heating coil, a third heating coil terminal connecting the first heating coil and the second heating coil to each other, a fourth heating coil terminal connected to the third heating coil, a fifth heating coil terminal connected to the fourth heating coil, and a sixth heating coil terminal connecting the third heating coil and the fourth heating coil to each other.

In an embodiment, the first heating coil terminal and the third heating coil terminal may be connected to the output terminal of the inverter circuit, and the second heating coil terminal and the fourth heating coil terminal may be connected to the ground voltage terminal.

Although the present disclosure has been described above with reference to the embodiments illustrated in the drawings, this is merely an example, and those skilled in the art will understand that various modifications and other equivalent embodiments may be derived therefrom. Accordingly, the true technical protection scope of the present disclosure should be determined by the following claims.

## Claims

1. A home appliance comprising:
a first heating coil terminal;
a first heating coil connected to the first heating coil terminal and formed in a pattern wound inwardly toward an inner center thereof in a clockwise direction;
a second heating coil terminal;
a second heating coil connected to the second heating coil terminal and formed in a pattern wound from an inner center thereof outwardly; and
a third heating coil terminal disposed between and connected to the first heating coil and the second heating coil.

2. The home appliance of claim 1, wherein the first heating coil and the second heating coil are connected to each other such that opposite polarities thereof are connected to each other.

3. The home appliance of claim 1, wherein the first heating coil and the second heating coil are connected to each other such that a flow direction of a current flowing in the first heating coil and a flow direction of a current flowing in the second heating coil are opposite to each other.

4. The home appliance of claim 3, wherein the first heating coil terminal is connected to an output terminal of an inverter circuit.

5. The home appliance of claim 4, wherein the second heating coil terminal is connected to a ground voltage terminal.

6. The home appliance of claim 5, wherein the home appliance further comprises:
a first resonant capacitor disposed between and connected to the first heating coil terminal and an output terminal of the inverter circuit; and
a second resonant capacitor disposed between and connected to the second heating coil terminal and the ground voltage terminal.

7. The home appliance of claim 1, wherein the third heating coil terminal is connected to a center of the first heating coil and a center of the second heating coil.

8. The home appliance of claim 1, wherein the first heating coil and the second heating coil are formed into an integral PCB pattern assembly.

9. The home appliance of claim 8, wherein the PCB pattern assembly includes heating coil PCBs of a plurality of layers,
wherein a heating coil pattern is formed on at least one of an upper surface or a lower surface of the heating coil PCB of each of the layers.

10. The home appliance of claim 9, wherein the first heating coil terminal, the second heating coil terminal, and the third heating coil terminal are formed at at least one of a front side or a rear aide of the PCB pattern assembly.

11. The home appliance of claim 10, wherein the third heating coil terminal is disposed at a middle point of one side of the PCB pattern assembly,
wherein the first heating coil terminal and the second heating coil terminal are disposed at a left side or a right side around the middle point of the one side thereof.

12. The home appliance of claim 8, wherein the PCB pattern assembly further includes sensing coil PCBs of a plurality of layers,
wherein a plurality of sensing coils are formed on at least one of an upper surface or a lower surface of the sensing coil PCB of each of the layer, wherein each of the plurality of sensing coils is wound in a circular pattern.

13. The home appliance of claim 12, wherein the sensing coil PCBs are disposed on top of the heating coil PCBs,
wherein the sensing coil PCBs and the heating coil PCBs are formed into the integral PCB pattern assembly.

14. The home appliance of claim 12, wherein a temperature sensor is disposed at a center of each of the plurality of sensing coils.

15. The home appliance of claim 14, wherein a connector having a plurality of connection ports is disposed at a right side or a left side around a middle point of one side of the PCB pattern assembly,
wherein the plurality of sensing coils and the temperature sensor are respectively connected to respective connection ports of the connector via respective sensing wirings,
wherein the first heating coil and the second heating coil are connected in series to each other via a heating coil wiring intersecting the first heating coil and the second heating coil.
